# EUROPÄISCHE PATENTANMELDUNG

(11) **EP 3 829 041 A1**
(43) Veröffentlichungstag der Anmeldung: **02.06.2021**
(21) Anmeldenummer: 19212502.9
(22) Anmeldetag: 29.11.2019
(51) Int. Cl.: H02K 11/215, H02K 3/52

(54) **HALL PLATINE INNERHALB DER WICKELKÖPFE**

(71) Anmelder: Hilti Aktiengesellschaft, 9494 Schaan (LI)
(72) Erfinder: Artmann, Konrad, 86938 Schondorf (DE); Dietl, Lothar, 86916 Kaufering (DE); Schmid, Tobias, 86875 Emmenhausen (DE); Burger, Helmut, 86944 Unterdießen (DE)
(74) Vertreter: Hilti Aktiengesellschaft Corporate Intellectual Property

(57) **Zusammenfassung**

Elektromotor enthaltend eine Platinenhalterung und eine Winkelmesseinheit mit wenigstens einem Hall-Sensor zum Erfassen eines Drehwinkels sowie wenigstens zwei Haken zum Aufnehmen und Halten eines Wickeldrahts, wobei die Winkelmesseinheit zum Kommutieren des Elektromotors in Abhängigkeit des erfassten Drehwinkels ausgestaltet ist.

Platinenhalterung enthält eine topfartige Vertiefung mit einer Stirnfläche, wobei die Vertiefung und die Winkelmesseinheit so ausgestaltet sind, dass in einem montierten Zustand die Winkelmesseinheit so an der Stirnfläche der Vertiefung anliegt, dass die Winkelmesseinheit in einer Pfeilrichtung vor den wenigstens zwei Haken positioniert ist.

## Beschreibung

Die vorliegende Erfindung betrifft einen Stator für einen Elektromotor enthaltend eine Platinenhalterung und eine Winkelmesseinheit mit wenigstens einem Hall-Sensor zum Erfassen eines Drehwinkels sowie wenigstens zwei Haken zum Aufnehmen und Halten eines Wickeldrahts, wobei die Winkelmesseinheit zum Kommutieren des Elektromotors in Abhängigkeit des erfassten Drehwinkels ausgestaltet ist.

Darüber hinaus betrifft die vorliegende Erfindung einen Elektromotor mit einem Stator.

Elektromotoren, insbesondere bürstenlose Elektromotoren, mit einem Stator sowie einem sich in dem Stator drehenden Rotor sind durch den Stand der Technik weitgehend bekannt. Die europäische Patentanmeldung EP 3 316 454 A1 zeigt beispielsweise einen Elektromotor gemäß dem Stand der Technik.

Ein Elektromotor gemäß dem Stand der Technik enthält üblicherweise und im Wesentlichen einen Stator sowie einen sich relativ zum Stator drehenden Rotor. Der Rotor für einen Elektromotor besteht für gewöhnlich aus einer Anzahl an hintereinander angeordneten Paketblechen zur Bildung eines sogenannten Blechpakets. Darüber hinaus enthält der Rotor eine Rotorwelle, die durch eine zentrale Öffnung des Blechpakets positioniert ist. Die Rotorwelle überträgt das im Elektromotor erzeugte Drehmoment auf weitere Bauteile.
Der Stator enthält neben zahlreichen Wickelstützen für einen Wickeldraht der Spulen auch eine Kommutierungseinrichtung zum Kommutieren des Elektromotors. Bei einem elektronisch kommutierten Elektromotor verfügt die Kommutierungseinrichtung über eine Anzahl an Hall-Sensoren, um die Magnete des sich drehenden Rotors und damit die Drehwinkelposition des Rotors relativ zum Stator zu erfassen.

Für gute Kommutierungssignale bei elektronisch kommutierten Elektromotoren müssen die Hall-Sensoren möglichst nahe an den am Rotor befindlichen Magneten positioniert werden. Das ist üblicherweise mit einem erhöhten baulichen Aufwand, z.B. gesonderten Signalgebern oder überlangen Rotoren verbunden.

Aufgabe der vorliegenden Erfindung ist es daher, einen Stator für einen Elektromotor sowie einen Elektromotor mit einem Stator bereitzustellen, mit dem das vorstehend genannte Problem gelöst und eine möglichst einfache sowie kompakte Bauart erreicht werden kann.

Die Aufgabe wird entsprechend gelöst durch den Gegenstand des unabhängigen Anspruchs 1 und 2.

Die Aufgabe wird insbesondere gelöst durch einen Stator für einen Elektromotor enthaltend eine Platinenhalterung und eine Winkelmesseinheit mit wenigstens einem Hall-Sensor zum Erfassen eines Drehwinkels sowie wenigstens zwei Haken zum Aufnehmen und Halten eines Wickeldrahts, wobei die Winkelmesseinheit zum Kommutieren des Elektromotors in Abhängigkeit des erfassten Drehwinkels ausgestaltet ist.

Erfindungsgemäß ist es möglich, dass die Platinenhalterung eine topfartige Vertiefung mit einer Stirnfläche enthält, wobei die Vertiefung und die Winkelmesseinheit so ausgestaltet sind, dass in einem montierten Zustand die Winkelmesseinheit so an der Stirnfläche der Vertiefung anliegt, dass die Winkelmesseinheit in einer Pfeilrichtung vor den wenigstens zwei Haken positioniert ist.

Des Weiteren wird die Aufgabe insbesondere gelöst durch einen Elektromotor mit einem Stator der eingangs genannten Art und den eingangs genannten Merkmalen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Ansicht auf einen Elektromotor mit einem Statorblechpaket, einer Wickelstützvorrichtung, einer Winkelmesseinheit, einer Platinenhalterung, einem Rotorblechpaket, einer Rotorwelle und einem Rotorwellenlager;
- Figur 2: eine seitliche Schnittansicht auf den Elektromotor mit dem Statorblechpaket, der Wickelstützvorrichtung, der Winkelmesseinheit, der Platinenhalterung, dem Rotorblechpaket, der Rotorwelle und dem Rotorwellenlager;
- Figur 3: eine weitere Schnittansicht mit mehr Details auf den Elektromotor mit dem Statorblechpaket, der Wickelstützvorrichtung, der Winkelmesseinheit, der Platinenhalterung, dem Rotorblechpaket, der Rotorwelle und dem Rotorwellenlager;
- Figur 4: eine perspektivische Schnittansicht mit weiteren Details auf die Platinenhalterung, die Winkelmesseinheit, die Rotorwelle und das Rotorwellenlager; und

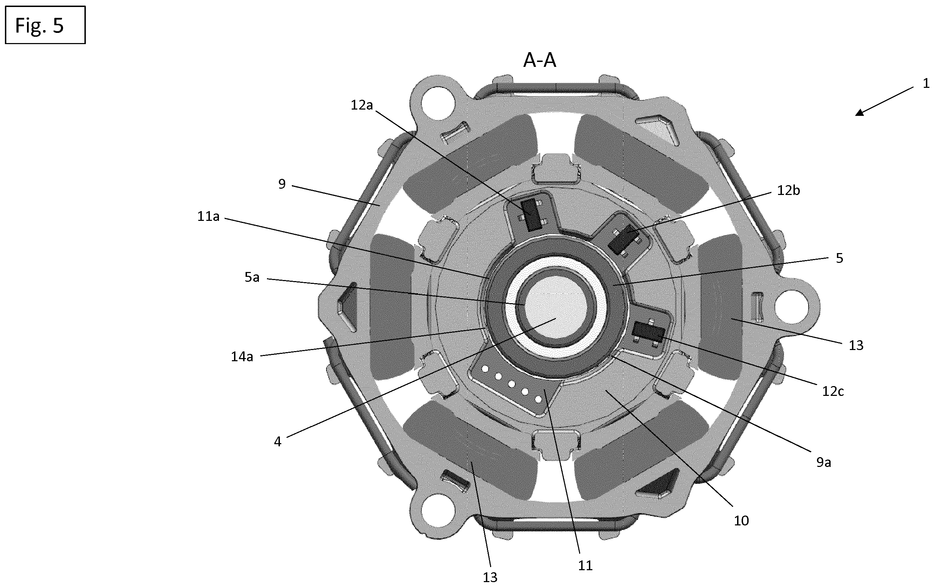

- Figur 5: eine Schnittansicht entlang der Schnittebene A-A in Figur 2 auf den Elektromotor mit dem Statorblechpaket, der Wickelstützvorrichtung, der Winkelmesseinheit, der Platinenhalterung, der Rotorwelle und dem Rotorwellenlager.

### Ausführungsbeispiele:

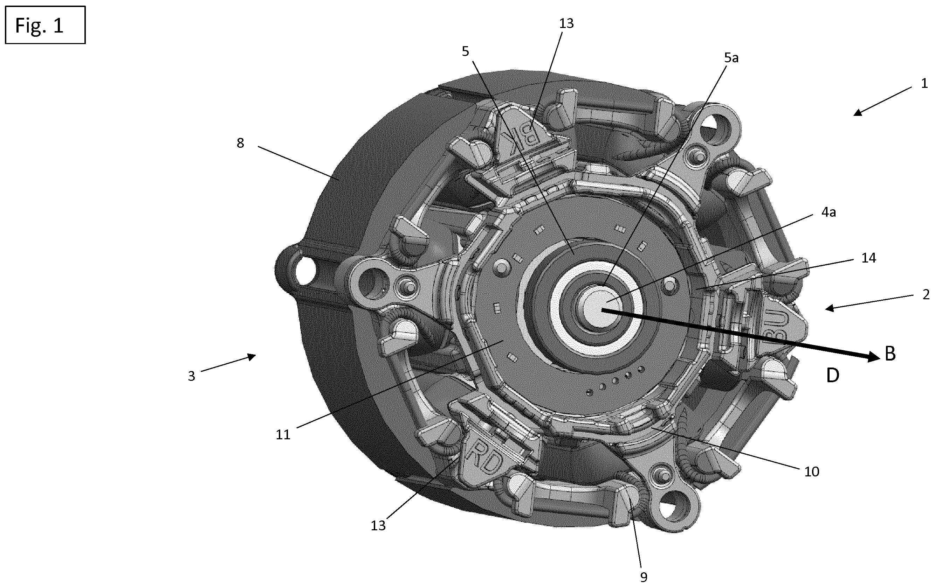

In Figur 1 zeigt einen erfindungsgemäßen Elektromotor 1. In dem gezeigten Ausführungsbeispiel handelt sich um einen bürstenlosen Elektromotor.

Der Elektromotor 1 kann wiederum als Antrieb in einer Werkzeugmaschine dienen. Die Werkzeugmaschine kann dabei als Bohrmaschine, Bohrhammer, Säge, Schleifgerät oder dergleichen ausgestaltet sein. Die Werkzeugmaschine ist in den Figuren nicht dargestellt.

Der Elektromotor 1 enthält im Wesentlichen einen Stator 2 sowie einen Rotor 3. Der Rotor 3 ist dabei drehbar relativ zum Stator 2 ausgestaltet und angeordnet. Mit Hilfe des sich relativ zum Stator 2 drehenden Rotors 3 kann ein Drehmoment erzeugt werden.

Der Rotor 3 kann als Läufer bezeichnet werden.

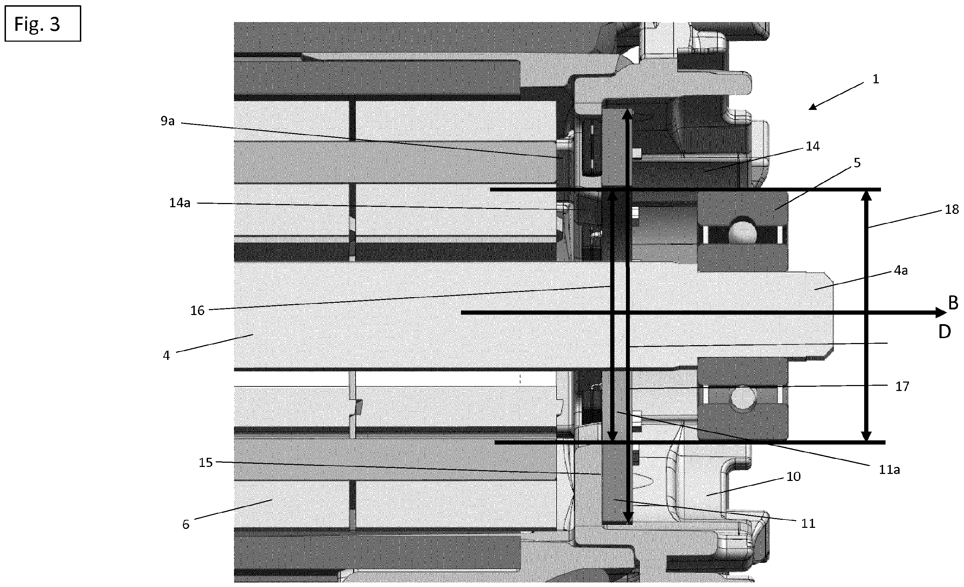

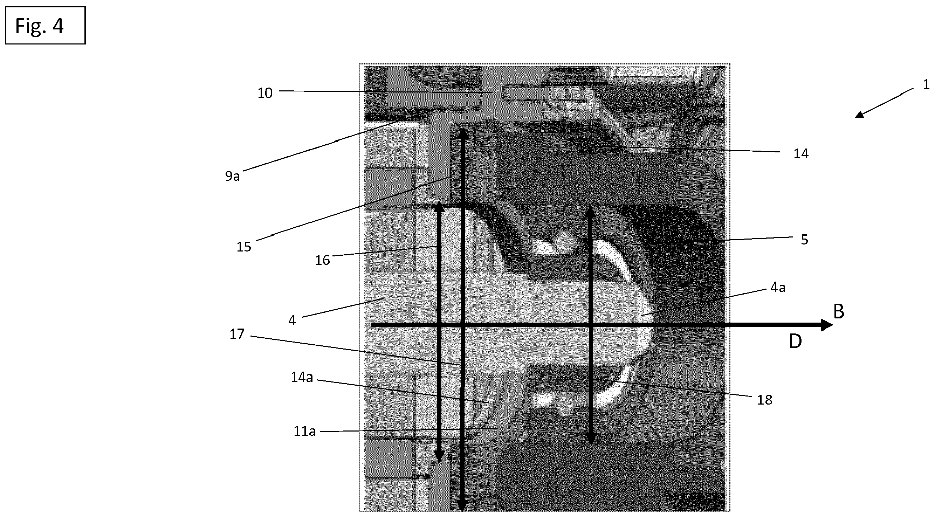

Der Rotor 3 enthält wiederum im Wesentlichen eine Rotorwelle 4 und ein Rotorwellenlager 5. Wie in Figur 3 und 4 angedeutete enthält der Rotor 3 ein Rotorblechpaket 6 (auch nur Blechpaket genannt). Das Rotorblechpaket 6 umfasst dabei mehrere hintereinander gereihte Paketbleche zur Bildung des zylindrischen Rotorblechpaket 6. Das Rotorblechpaket 6 enthält des Weiteren eine zentrale Durchbohrung 7, in die die Rotorwelle 4 eingeschoben ist. Die Rotorwelle 4 und das Rotorblechpaket 6 sind fest miteinander verbunden. Das Rotorwellenlager 5 ist kreisrund ausgestaltete und dient zur Lagerung der Rotorwelle 4. Die Rotorwelle 4 ist hierzu mit einem Ende 4a in die zentrale Öffnung 5a des Rotorwellenlagers 5 positioniert.

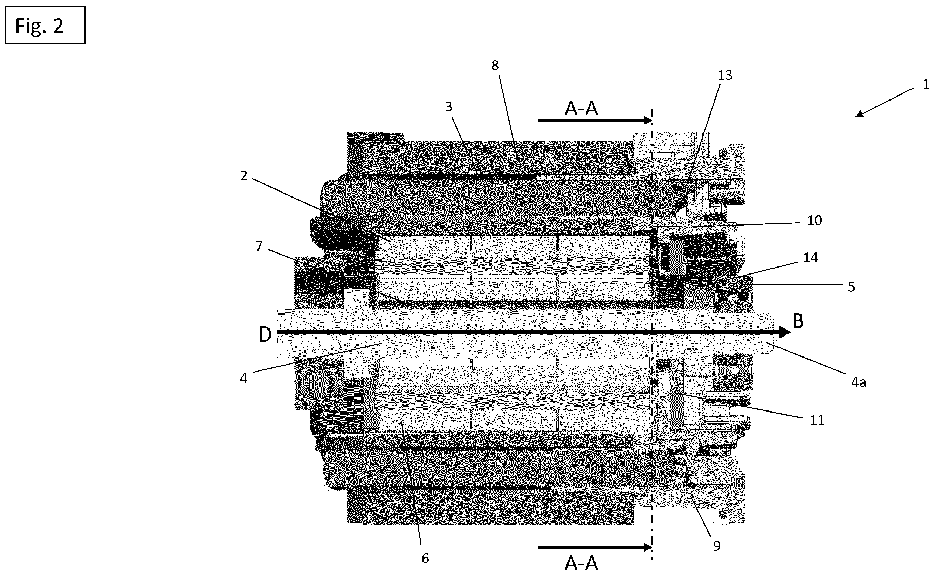

Der Stator 2 enthält im Wesentlichen ein Statorblechpaket 8 (auch nur Blechpaket genannt), eine Wickelstützvorrichtung 9 und eine Platinenhalterung 10 für eine Winkelmesseinheit 11, siehe insbesondere Figur 1 und 2.

Wie in den Figuren ersichtlich ist die Winkelmesseinheit 11 im Wesentlichen als ringförmige Platine mit einer kreisrunden Aussparung 11a ausgestaltet. Die Ausgestaltung der Winkelmesseinheit 11 kann auch als flacher Zylinder bezeichnet werden. Die Platine kann auch als Leiterplatte, Leiterkarte oder gedruckte Schaltung bezeichnet werden. Des Weiteren kann die Leiterplatte auch als printed circuit board oder PCB bezeichnet werden.
Die Winkelmesseinheit 11 enthält darüber hinaus einen ersten, zweiten und dritten Hall-Sensor 12a, 12b, 12c zum Erfassen der Magnete, die fest mit dem Rotor 3 verbunden sind. Hierdurch kann ein Drehwinkel des Rotors 3 relativ zum Stator 2 erfasst werden. Die Winkelmesseinheit 11 ist zum Kommutieren des Elektromotors 1 in Abhängigkeit des erfassten Drehwinkels ausgestaltet. 12a, 12b, 12c WickelstützvorrichtungWickelstützvorrichtungWickelstützvorrichtung dementsprechend sechs Haken 13.

Die Platinenhalterung 10 einer topfartigen Vertiefung 14 ausgestaltet. Die topfartige Vertiefung 14 weist eine Stirnfläche 15 sowie eine kreisrunde Aussparung 14a auf. Die Stirnfläche 15 ist in Figur 2 bis 4 angedeutet.

Platinenhalterung 10PlatinenhalterungPlatinenhalterung4a Ende der RotorwelleRotorwellenlagersRotorblechpaketzentrale Durchbohrung des RotorblechpaketsStatorblechpaket

## Patentansprüche

1. Stator (3) für einen Elektromotor (1) enthaltend eine Platinenhalterung (10) und eine Winkelmesseinheit (11) mit wenigstens einem Hall-Sensor (12a, 12b, 12c) zum Erfassen eines Drehwinkels sowie wenigstens zwei Haken (13) zum Aufnehmen und Halten eines Wickeldrahts, wobei die Winkelmesseinheit (11) zum Kommutieren des Elektromotors (1) in Abhängigkeit des erfassten Drehwinkels ausgestaltet ist,
**dadurch gekennzeichnet, dass** die Platinenhalterung (10) eine topfartige Vertiefung (14) mit einer Stirnfläche enthält, wobei die Vertiefung (14) und die Winkelmesseinheit (11) so ausgestaltet sind, dass in einem montierten Zustand die Winkelmesseinheit (11) so an der Stirnfläche der Vertiefung (14) anliegt, dass die Winkelmesseinheit (11) in einer Pfeilrichtung (B) vor den wenigstens zwei Haken (13) positioniert ist.

2. Elektromotor (1) mit einem Stator (3) nach Anspruch 1.
